# FASCICULE DE BREVET EUROPEEN

(11) **EP 0 703 236 B1**
(45) Date de publication et mention de la délivrance du brevet: **31.10.2001**
(21) Numéro de dépôt: 95420254.5
(22) Date de dépôt: 14.09.1995
(51) Int. Cl.: C07F 5/02, C09D 183/06, C08G 59/68, C08K 5/00, C08G 85/00

(54) **Amorceurs de réticulation, par voie cationique, de polymères à groupements organofonctionnels compositions à base de polyorganosiloxanes réticulables et contenant ces amorceurs et application desdites compositions en antiadhérence**
Für Vernetzungsreaktionen geeignete kationische Initiatoren, diese Initiatore enthaltende, vernetzbare organofunktionelle Gruppen enthaltend Polysiloxanzusammensetzungen und deren Anwendung zur Trennmittelbeschichtungen
Cationic crosslinking initiators, crosslinkable organofunctional group containing compositions containing these initiators, and their use in antiadherent compositions

(30) Priorité: 16.09.1994 FR 9411463
(43) Date de publication de la demande: 27.03.1996
(73) Titulaire: RHODIA CHIMIE, 92408 Courbevoie Cédex (FR)
(72) Inventeur: Priou, Christian, F-69100 Villeurbanne (FR)
(74) Mandataire: Fleurance, Raphael

(56) Documents cités:
- EP-A- 0 522 703
- EP-A- 0 562 897
- EP-A- 0 562 922
- EP-A- 0 614 958
- US-A- 4 694 029

## Description

Le domaine de l'invention est celui de la catalyse de réactions de polymérisation et/ou de réticulation par voie cationique, de monomères et/ou polymères, e.g. siliciés, comprenant des radicaux fonctionnels réactifs aptes à former des pontages intra et inter caténaires, de manière à obtenir un matériau polymérisé et/ou réticulé ayant une certaine dureté et une certaine tenue mécanique.

Plus précisément, la présente invention a pour objet des amorceurs de polymérisation et/ou de réticulation par voie cationique. Bien que ces amorceurs ne soient pas des catalyseurs stricto sensu, on peut tout de même les assimiler à des composés catalytiques qui permettent l'initiation et le déroulement de réaction de formation de polymères et/ou de réticulats, à partir de substrats formés de monomères et/ou de polymères à groupements organofonctionnels réactifs.

Les réactions plus particulièrement concernées sont celles dans lesquelles des agents cationiques agissent comme promoteurs directs des liaisons inter et/ou intra caténaires.

Traditionnellement, ces réactions ne peuvent se produire que sous activation photochimique et/ou thermique et/ou par faisceau d'électrons. En pratique, c'est par exemple l'énergie lumineuse d'un rayonnement UV qui permet la formation des protagonistes actifs, par exemple par coupure radicalaire, et ainsi le déclenchement et la poursuite de la réticulation et/ou polymérisation.

Sans que cela ne soit limitatif, il est plus particulièrement question, dans le présent exposé de substrats polymérisés ou réticulés de type polyorganosiloxanes à groupements organofonctionnels réactifs, par exemple du type époxyde et/ou vinyléther. Ces polyorganosiloxanes fonctionnels réticulables par voie cationique et à l'aide des amorceurs visés ci-dessus, peuvent être notamment utilisés pour la réalisation de revêtements anti-adhésifs sur des articles ou supports solides (e.g. papier, film polymère, du type polyester, polyéthylène....).

La présente invention a donc également pour objet des compositions à base de polyorganosiloxanes fonctionnels réticulables et des amorceurs susvisés.

Elle concerne également l'application de ces compositions en tant que revêtements d'articles ou de supports solides, ces derniers constituants eux aussi un objet de l'invention.

Des amorceurs cationiques de polymérisation ou de réticulation, e.g. par voie photochimique, de monomères ou de polymères fonctionnels du type polyorganosiloxanes notamment, sont décrits dans la demande de brevet européen **N° 0 562 897** au nom de la Demanderesse. Ces photoamorceurs sont constitués par des borates d'onium d'un élément des groupes 15 à 17 de la classification périodique (Chem & Eng News, Vol 63, N° 5, 26 du 4 Février 1985) ou d'un complexe organométallique d'un élément du groupe 4 à 10 de la classification périodique (Chem & Eng News, Vol 63, N° 5, 26 du 4 Février 1985), dont l'entité anionique borate a pour formule :

[B Xₐ R_{b}]⁻

formule dans laquelle :
- a et b sont des nombres entiers allant de 0 à 4 avec a + b = 4,
- les symboles X représentent :
   - un atome d'halogène (chlore, fluor) avec a = 0 à 3,
   - une fonction OH avec a = 0 à 2,
- les symboles R sont identiques ou différents et représentent :
   - un radical phényle substitué par au moins un groupement électroattracteur ou par au moins 2 atomes d'halogène,
   - un radical aryle contenant au moins deux noyaux aromatiques éventuellement substitués par au moins un élément ou un groupe électroattracteur.

Ces nouveaux sels autoamorceurs représentent un progrès technique notable par rapport aux amorceurs connus de type sels d'onium ou de complexes organométalliques, et en particulier par rapport à ceux dont l'anion du sel amorceur est SbF₆- qui est l'un des seuls qui soient corrects sur le plan des performances catalytiques, mais qui pose de graves problèmes d'utilisation en raison de sa toxicité.

Les sels photoamorceurs selon l'**EP-A-0 562 897** sont employés en association avec un alcool, tel que le méthanol, pour la réalisation de revêtements anti-adhérents sur papier, à partir de monomères époxydés, réticulés par irradiation sous UV. Pour apprécier les performances du photoamorceur, on évalue la réactivité du couple substrat/amorceur et la vitesse de réticulation, au travers de la vitesse de défilement nécessaire au durcissement de la couche enduite sur le papier ainsi qu'au travers du nombre de passages.

Les compositions à base de polyorganosiloxanes réticulables à l'aide des borates d'onium selon l'**EP-A-0 562 897**, sont décrites et revendiquées dans la demande de brevet européen **N° 0 562 922**, également au nom de la Demanderesse. Selon ce dernier document, les systèmes photoamorceurs mis en oeuvre, comportent le borate d'onium et un solvant alcoolique du type méthanol ou éthyle-2-hexanediol.

**L'EP-A- 0 614 958** divulgue des compositions à base de polyorganosiloxanes réticulables par voie cationique et à base de borates d'oniums. Ces compositions sont du type de celles décrites de l'EP-A-0 562 922 mentionnées ci-dessus.

La qualité des revêtements obtenus reflète les performances de ces systèmes photoamorceurs. Et pour apprécier cette qualité de revêtement, on évalue les propriétés anti-adhérentes de la couche de polymère silicone réticulé fixée sur le support. Les résultats mesurés sont acceptables, mais il n'en demeure pas moins que, pour satisfaire aux exigences de productivité des applicateurs, les systèmes amorceurs se doivent d'être de plus en plus performants. Ils doivent donc permettre d'atteindre des réactivités et des vitesses de réticulation/polymérisation aussi élevées que possible, de manière à pouvoir augmenter les cadences d'enduction.

L'**US-A-4 694 029** concerne une composition photopolymérisable comprenant :
. un mélange de composés époxydés (époxydes cycloaliphatiques) et de monomères polymérisables du type acrylique ;
. un photoinitiateur cationique du genre polyarylsulfonium ou polyaryliodonium dont l'entité anionique fluorée est non aromatique ;
. un photoinitiateur radicalaire ;
. un accélérateur alcoolique, de préférence du type alcool furfurylique.

Il apparaît donc que la composition photoamorceur selon l'US-A-4 694 029 comprend un photoinitiateur cationique dont l'entité anionique n'est pas aromatique. En outre, cette composition comprend nécessairement un photoinitiateur radicalaire associé au photoinitiateur cationique. Enfin, l'accélérateur alcoolique selon l'US-A-4 694 029 n'est pas aromatique. Cette composition présente des performances perfectibles en termes de la cinétique de réaction et, dans le cas des silicones, en termes de propriétés d'anti-adhérence.
Finalement, cette composition ne satisfait pas aux exigences sus-mentionnées.

L'**EP-A-0 522 703** vise un photocatalyseur pour composition silicone époxydée réticulable sous UV. Ce photocatalyseur comprend des sels de bis(aryl)iodonium+ / Sb F6-, BF6- et BF4- ; ainsi qu'un diluant réactif choisi parmi les phénols organiques substitués, par exemple par des alkyles (dodécyle).
Il ne s'agit pas de borates d'onium particuliers, en ce qui concerne les sels photoinitiateurs, ni d'alcools benzyliques en ce qui concerne le diluant réactif.
Cette composition selon l'EP-A-0 522 703 ne permet pas d'obtenir des performances satisfaisantes en termes de vitesse de réticulation et de propriétés d'anti-adhérence s'agissant des silicones. En réalité, la mise en oeuvre, selon l'EP-A-0 522 703, de phénols organiques à titre d'accélérateurs a pour but de permettre l'amélioration de la stabilité thermique de solutions de sels bis(aryl)iodonium (Cf. page 2 lignes 28 et 29 du document 4).
En conséquence, l'EP-A-0 522 703 est de nature à dissuader l'homme de l'art de mettre en oeuvre des aromatiques à titre d'accélérateur, au vu des performances perfectibles auxquelles il conduit.
Il est donc manifeste que la composition selon l'EP-A-0 522 703 ne satisfait pas elle non plus aux exigences susvisées.

Dans cet état de faits, l'un des objectifs essentiels de la présente invention est de satisfaire aux susdites exigences.

Un autre objectif essentiel de l'invention est de fournir des amorceurs performants vis-à-vis du plus grand nombre de monomères/polymères, dont notamment les polyorganosiloxanes fonctionnels, réticulables par voie cationique et sous UV.

Un autre objectif essentiel de l'invention est de fournir des amorceurs cationiques efficaces mais aussi peu coûteux, faciles à manipuler et peu toxiques.

Un autre objectif de l'invention est de fournir des compositions de monomères/polymères organofonctionnels, en particulier de polyorganosiloxanes organofonctionnels, réticulables par voie cationique et sous activation photonique et/ou thermique et/ou par faisceau d'électrons.

Un autre objectif de l'invention est de fournir un procédé d'enduction d'articles ou de supports solides à l'aide de susdites compositions, ainsi que les articles à revêtement anti-adhérent réticulé obtenus.

Ces objectifs et d'autres sont atteints par l'invention qui concerne, tout d'abord, des amorceurs de polymérisation et/ou de réticulation par voie cationique et sous activation photochimique et/ou thermique et/ou par faisceaux d'électrons, de monomères et/ou de polymères à groupements organofonctionnels,
lesdits amorceurs étant caractérisés :
- en ce qu'ils comprennent une quantité catalytique efficace d'au moins un borate d'onium
   - dont l'entité cationique est choisie parmi :
      1) les sels d'onium de formule (II) :

         [(R¹)ₙ - A - (R²)ₘ]⁺ (**II**)

         formule dans laquelle :
         - A représente un élément des groupes 15 à 17 tel que I, S, Se, P, N,
         - R¹ représente un radical aryle carbocyclique ou hétérocyclique en C₆-C₂₀, de préférence phényle, tolyle ou toluyle, ledit radical hétérocyclique pouvant contenir de l'azote, du soufre comme hétéroéléments,
         - R² représente R¹ ou un radical alkyle ou alkényle linéaire ou ramifié en C₁-C₃₀;
            lesdits radicaux R¹ et R² étant éventuellement substitués par un groupement alcoxy en C₁-C₂₅, alkyle en C₁-C₂₅, nitro, chloro, bromo, cyano, carboxy, mercapto,
         - n est un nombre entier allant de 1 à v + 1, v étant la valence de l'élément A,
         - m est un nombre entier allant de 0 à v - 1 avec n + m = v + 1,
      2) - Les sels d'oxoisothiochromanium, notamment le sel de sulfonium du 2-éthyl-4-oxoisothiochromanium ou de 2-dodécyl-4-oxoisothiochromanium,
   - et dont l'entité anionique borate a pour formule (**III**) :

      [BXₐR_{b}] (**III**)

      formule dans laquelle :
      - a et b sont des nombres entiers allant de 0 à 4 avec a + b = 4,
      - les symboles X représentent :
         * un atome d'halogène (chlore, fluor) avec a = 0 à 3,
         * une fonction OH avec a = 0 à 2,
      - les symboles R sont identiques ou différents et représentent :
         * un radical phényle substitué par au moins un groupement électroattracteur tel que CF₃, NO₂, CN, ou par au moins 2 atomes d'halogène (fluor tout particulièrement),
         * un radical aryle contenant au moins deux noyaux aromatiques tel que biphényle, naphtyle, éventuellement substitué par au moins un élément ou un groupement électroattracteur, notamment atome d'halogène (fluor tout particulièrement), CF₃, NO₂, CN,
      - et en ce qu'ils comportent au moins un accélérateur de polymérisation et/ou réticulation choisi parmi les alcools benzyliques de formule générale (**I**) suivante : 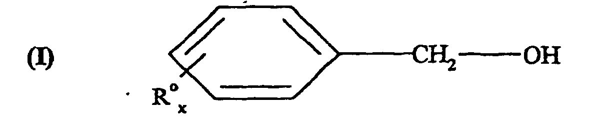 dans laquelle :
         - R^{o} est un groupement électrodonneur ou électroaccepteur, de préférence électroaccepteur et choisi parmi les (cyclo)alkyles, les (cyclo)alcoxyles en C₁-C₁₂ linéaires ou ramifiés, les aryles, éventuellement substitués de préférence par des halogènes, ou les radicaux du type NO₂,
         - x est entier compris entre 0 et 5,
         - et les groupements R^{o} étant identiques ou différents entre eux quand x > 1,
            les formules (**I**) dans lesquelles x = 0 ou celles dans lesquelles x > o et avec R^{o} représentant un groupement méthyle, t-butyle ou isopropyle, étant particulièrement préférées.

Ces accélérateurs permettent d'améliorer significativement les performances de réactivité et de cinétique des amorceurs cationiques. Et il est du mérite de la Demanderesse d'avoir pu isoler une famille de solvants organiques particuliers, convenant particulièrement bien à titre d'accélérateur.

Cette sous-famille préférée d'accélérateurs de type alcool benzylique, regroupe des composés qui remplissent parfaitement bien la fonction principale visée mais qui ont, en outre, l'avantage d'être très économiques, peu toxiques, facilement manipulables et compatibles avec les sels amorceurs cationiques connus.

En pratique, les proportions pondérales entre le ou les sels amorceurs, notamment les borates d'onium, d'une part, et l'accélérateur, d'autre part, exprimées en parties en poids, sont respectivement comprises entre 0,1 : 100 et 1 : 0,5, de préférence entre 2 : 100 et 1 : 1, cette dernière proportion étant particulièrement préférée.

Avantageusement, l'entité anionique borate est choisie parmi les anions suivants :
[B(C₆F₅)₄]⁻ [B(C₆H₄CF₃)₄]⁻ [B(C₆H₃(CF₃)₂)₄]⁻
[(C₆F₅)₂BF₂]⁻ [C₆F₅BF₃]⁻ [B (C₆H₃F₂)₄]⁻

S'agissant de l'entité cationique,qui est avantageusement de type onium, elle est, plus préférentiellement, sélectionnée parmi les cations suivants :
[(Φ)₂I]⁺ [C₈H₁₇-O-Φ-I-Φ]⁺ [(Φ-CH₃)₂I]⁺
[C₁₂H₂₅-Φ-I-Φ]⁺ [(C₈H₁₇-O-Φ)₂I]⁺
[(Φ)₃S]⁺ [(Φ)₂-S-Φ-O-C₈H₁₇]⁺
[Φ-S-Φ-S-(Φ)₂]⁺ [(C₁₂H₂₅-Φ)₂I]⁺

Conformément à l'invention, les amorceurs que l'on mettra en oeuvre de façon plus privilégiée, sont les borates d'onium suivants :
[(Φ-CH₃)₂I]⁺, [B(C₆F₅)₄]⁻
[(Φ)₂I]⁺, [B(C₆F₅)₄]⁻ [Φ₂I]⁺, [B(C₆H₃(CF₃)₂)₄]⁻
[C₁₂H₂₅-Φ-I-Φ]⁺, [B(C₆F₅)₄]⁻ [(C₈H₁₇-O-Φ)₂I]⁺, [B(C₆F₅)₄]⁻
[(C₈H₁₇)-O-Φ-I-Φ)]⁺, [B(C₆F₅)₄]⁻ [(Φ)₃S]⁺, [B(C₆F₅)₄]⁻
[(Φ)₂S-Φ-O-C₈H₁₇]⁺, [B(C₆H₄CF₃)₄]⁻ [(C₁₂H₂₅-Φ)₂I]⁺, [B (C₆F₅)₄]⁻

Les borates d'onium ou de complexes organométalliques et, plus particulièrement, les borates d'onium, entrant dans la formulation du système amorceur selon l'invention sont définis en détail dans les demandes de brevet européens **N° 0 562 897** et **0 562 922** précitées. Le contenu de celles-ci est incorporé par référence dans le présent exposé.

En pratique, les amorceurs suivant l'invention sont préparés de manière très simple par dissolution du borate d'onium ou de complexe organométallique, de préférence d'onium, se présentant sous forme solide (poudre) dans l'accélérateur, avantageusement constitué par un solvant du type alcool benzylique.

Selon une alternative concernant le borate d'onium, ce dernier peut être préparé directement dans l'accélérateur, à partir d'un sel (e. g. chlorure) du cation (iodonium) et d'un sel (par exemple de potassium) de l'anion borate.

Le système précurseur ainsi obtenu peut être mis en oeuvre, tel quel dans des compositions de monomères/polymères, un polymérisé/réticulé par voie cationique et sous activation, par exemple UV.

Selon un autre de ces aspects, la présente invention concerne des compositions à base d'au moins un polyorganosiloxane réticulable par voie cationique et d'au moins un amorceur du type de ceux conformes à l'invention et décrits ci-avant.

De préférence, ce polyorganosiloxane présente des groupements organofonctionnels du type époxyde et/ou vinyl éther et il est choisi parmi les polyorganosiloxanes qui sont :
→ soit linéaires ou sensiblement linéaires et constitués de motifs de formule (**IV**), terminés par des motifs de formule (**V**),
→ soit cycliques et constitués par des motifs de formule (**IV**) : 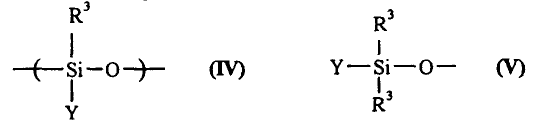 formules dans lesquelles :
   - les symboles R³ sont semblables ou différents et représentent :
      - soit un radical alkyle linéaire ou ramifié en C₁-C₆, éventuellement substitué, avantageusement par un ou des halogènes, les radicaux alkyles éventuellement substitués préférés étant : méthyle, éthyle, propyle, octyle et 3,3,3 trifluoropropyle,
      - soit un radical cycloalkyle en C₅-C₈, éventuellement substitué,
      - soit un radical aryle ou aralkyle, éventuellement substitué :
         . notamment par des halogènes et/ou des alcoxyles,
         . les radicaux phényle, xylyle, tolyle et dichlorophényle étant tout particulièrement sélectionnés,
      - et, plus préférentiellement encore, au moins 60 % molaire des radicaux R³ étant des méthyles,
   - les symboles Y sont semblables ou différents et représentent :
      - soit le radical R³,
      - soit un groupement organofonctionnel réticulable par voie cationique, de préférence un groupement époxyfonctionnel ou vinyloxyfonctionnel, relié au silicium par l'intermédiaire d'un radical divalent contenant, avantageusement, de 2 à 20 atomes de carbone comportant, éventuellement, un hétéroatome,
   l'un au moins des symboles Y correspondant à un groupement organofonctionnel réticulable par voie cationique.

Selon une modalité préférée de l'invention, le polyorganosiloxane comporte de 1 à 10 groupements organofonctionnels par mole. Pour un groupement époxyfonctionnel, cela correspond à des taux d'époxyde variant de 20 à 200 meq molaire/100 g de produit.

Comme exemples de radicaux divalents reliant un groupement organofonctionnel du type époxy, on peut citer ceux inclus dans les formules (**Y**) suivantes :

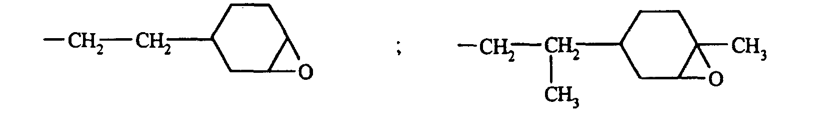

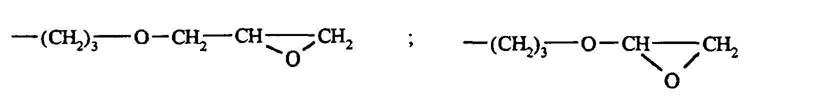

S'agissant des groupements organofonctionnels du type vinyléther, on peut mentionner, e. g., ceux contenus dans les formules (**Y**) suivantes :

―(CH₂)₃―O―CH=CH₂ ; ―(CH₃)₂―O―R⁴―O―CH=CH₂

avec R⁴ =
- alkylène linéaire ou ramifié en C₁-C₁₂, éventuellement substitué,
- ou arylène, de préférence phénylène, éventuellement substitué, de préférence par un à trois groupements alkyles en C₁-C₆.

Les polyorganosiloxanes linéaires peuvent être des huiles de viscosité dynamique à 25 °C, de l'ordre de 10 à 10 000 mPa.s à 25 °C, généralement de l'ordre de 50 à 5 000 mPa.s à 25 °C et, plus préférentiellement encore, de 100 à 600 mPa.s à 25 °C, ou des gommes présentant une masse moléculaire de l'ordre de 1 000 000.

La viscosité dynamique à 25 °C, de tous les polymères silicones considérés dans le rpésent exposé, peut être mesurée à l'aide d'un viscosimètre BROOKFIELD, selon la norme AFNOR NFT 76 102 de février 1972.

La viscosité dont il est question dans le présent exposé est la viscosité dynamique à 25 °C, dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

Lorsqu'il s'agit de polyorganosiloxanes cycliques, ceux-ci sont constitués de motifs (**IV**) qui peuvent être, par exemple, du type dialkylsiloxy ou alkylarylsiloxy. Ces polyorganosiloxanes cycliques présentent une viscosité de l'ordre de 1 à 5 000 mPa.s.

Disposant de cette grande variété de polyorganosiloxanes, il est parfaitement envisageable de mettre en oeuvre un mélange de différents produits de formule (**IV**) et (**V**), tels que définis ci-dessus, dans le cadre de l'invention.

Les polyorganosiloxanes époxy ou vinyloxyfonctionnels préférés sont décrits notamment dans les brevets DE-A-4 009 889 ; EP-A-0 396130 ; EP-A-0 355 381; EP-A-0 105 341 ; FR-A-2 110 115 ; FR-A-2 526 800.

Les polyorganosiloxanes époxy fonctionnels peuvent être préparés par réaction d'hydrosilylation entre des huiles à motifs Si-H et des composés époxyfonctionnels, tels que vinyl-4 cyclohexèneoxyde, allylglycidyléther...

Les polyorganosiloxanes vinyloxyfonctionnels peuvent être préparés par réaction d'hydrosilylation entre des huiles à motifs Si-H et des composés vinyloxyfonctionnels, tels que l'allylvinyléther, l'allyl-vinyloxyéthoxybenzène...

Les polyorganosiloxanes donnés ci-dessus à titre d'exemple sont particulièrement intéressants, dans la mesure où les accélérateurs du type alcool benzylique, conformes à l'invention, se sont avérés être parfaitement solubles dans ces polyorganosiloxanes.

Par quantité catalytique efficace de borate d'onium ou de complexes organométalliques, on entend, selon l'invention, la quantité suffisante pour amorcer la réticulation. Cette quantité est généralement comprise entre 0,01 et 20 parties en poids, le plus souvent entre 0,1 et 8 parties en poids pour réticuler, par voie photochimique, 100 parties en poids de polyorganosiloxanes.

Les compositions selon l'invention peuvent comprendre également au moins un photosensibilisateur sélectionné parmi les produits (poly) aromatiques (éventuellement métalliques) et les hétérocycliques, et, de préférence, dans la liste de produits suivants : toluène, pyridine, ferrocène, benzène, thioxanthone, anthracène, benzophénone.

Classiquement, les compositions selon l'invention peuvent comprendre, en outre, différents additifs, choisis en fonction de l'application finale visée. Il peut s'agir, par exemple, de charges minérales ou non et/ou de pigments, tels que des fibres synthétiques ou naturelles (polymères) broyées, du carbonate de calcium, du talc, de l'argile, du dioxyde de titane ou de la silice fumée. Cela peut permettre d'améliorer e.g. les caractéristiques mécaniques des matériaux finaux.

Les colorants solubles, les inhibiteurs d'oxydation, et/ou tout autre matériau n'interférant pas avec l'activité catalytique du photoamorceur et n'absorbant pas dans la gamme de longueurs d'onde choisie pour la photoactivation, peuvent être ajoutés également à la composition ou mis en oeuvre dans le cadre du procédé selon l'invention.

Les compositions selon l'invention peuvent comporter, enfin, d'autres ingrédients, tels que des modulateurs d'adhérence (résines ou polymères linéaires silicones portant des fonctions vinyle, époxy, vinyléther, alcool...), des agents fongicides, bactéricides et anti-microbiens, des inhibiteurs de corrosion, etc...

Ces compositions conformes à l'invention sont préparées, indifféremment, avant (voire même longtemps avant) ou bien encore immédiatement avant l'utilisation.

Il est à noter que ces compositions sont particulièrement stables au stockage et qu'elles offrent, conformément au procédé de l'invention, des cinétiques de réticulation rapides. En outre, leur état non réticulé, avant exposition au rayonnement lumineux d'activation, offre de grandes facilités de manipulation, d'application ou de mise en place sur différents supports ou autres moules de façonnage.

Les compositions selon l'invention sont utilisables telles quelles. Elles sont utiles dans le domaine des revêtements anti-adhérents sur des supports solides de toute nature, tels que les matériaux cellulosiques, plastiques, métalliques ou céramiques, i.a. sur les films, les peintures ou pour l'encapsulation de composants électriques et électroniques, les revêtements pour textiles, ainsi que pour le gainage de fibres optiques.

Elles sont tout particulièrement intéressantes lorsqu'elles sont utilisées telles quelles pour rendre non adhérent un matériau, tel que des feuilles métalliques, du verre, des matières plastiques ou du papier, à d'autres matériaux auquels il adhérerait normalement. La composition présente, avantageusement, une viscosité ne dépassant pas 5 000 mPa.s, de préférence ne dépassant pas 4 000 mPa.s à 25° C.

L'invention vise donc également un procédé permettant de rendre des articles (feuilles par exemple) non adhérents à des surfaces auxquelles ils adhèrent normalement, procédé caractérisé en ce qu'il consiste à appliquer une quantité de composition de l'invention, comprise généralement entre 0,1 et 5 g par m² de surface à enduire et à réticuler la composition par apport d'énergie dont au moins une partie, de préférence la totalité, est fournie par un rayonnement UV.

Le rayonnement UV utilisé présente une longueur d'onde comprise entre 200 et 400 nanomètres, de préférence compris entre 254 et 360 nanomètres.

La durée d'irradiation peut être courte et elle est généralement inférieure à 1 seconde et est de l'ordre de quelques centièmes de seconde pour les très faibles épaisseurs de revêtements. La réticulation effectuée est excellente, même en l'absence de tout chauffage. Bien entendu, le couplage de la photoactivation à une thermoactivation, e.g. par chauffage entre 25 et 100° C, n'est pas exclu de l'invention.

Bien entendu, on peut régler le temps de durcissement, notamment par le nombre de lampes UV utilisées, par la durée d'exposition aux UV et par la distance entre la composition et la lampe UV.

Les quantités de compositions déposées sur les supports sont variables et s'échelonnent, le plus souvent, entre 0,1 et 5 g/m² de surface traitée. Ces quantités dépendent de la nature des supports et des propriétés antiadhérentes recherchées. Elles sont plus souvent comprises entre 0,5 et 3 g/m² pour des supports non poreux.

La présente invention a également pour objet les articles (feuilles par exemple) constitués d'un matériau solide (métal, verre, matière plastique, papier...) au moins en partie revêtues de la composition ci-dessus décrite, au moins partiellement réticulée.

Les exemples suivants sont donnés à titre illustratif et ne peuvent être considérés comme une limite du domaine et de l'esprit de l'invention.

### EXEMPLES

### EXEMPLES 1 à 6

### I - Matières premières

### I.1 . Les polyorganosiloxanes fonctionnalisés mis en oeuvre sont des (1,2-époxy-4-éthylecyclohexyl)-polydiméthylsiloxanes de formule :

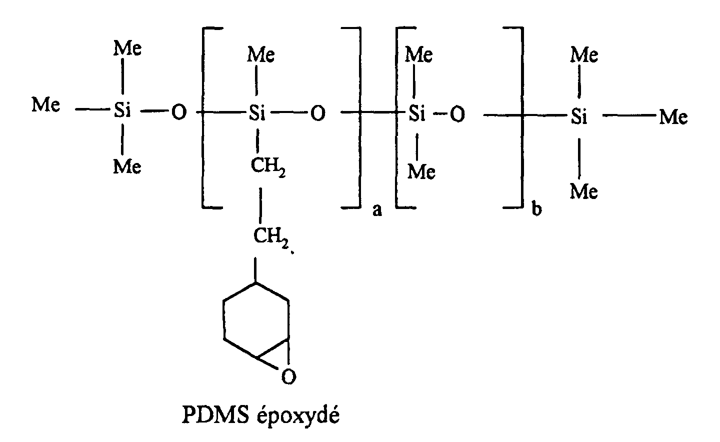

a et b, donc le taux d'époxy, varient selon les exemples 1 à 7 :
. Exemple 1 comparatif et exemples 2 à 4 :
a = 4,5 b = 115
. Exemple 5 comparatif et exemples 6 à 8 :

| EXEMPLES | a | b |
|---|---|---|
| 5 | 8 | 110 |
| 6 | 5,3 | 109 |
| 7 | 8 | 110 |
| 8 | 6 | 48 |

### I.2. L'amorceur est un borate d'onium : le tétrakis (pentafluorophényl) borate de ditolyliodonium de formule :

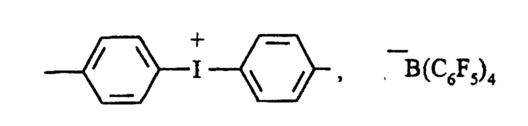

Le cation de ce borate d'onium est préparé selon la méthodologie générale décrite dans les demandes de brevet européen **N° 0 562 922** et **0 562 897**. Concernant l'entité anionique borate, on procède de la manière suivante :
Le bromopentafluorobenzène (21,3 g, 0,086 mole) et l'éther isopropylique sont chargés, sous atmosphère inerte, dans un ballon de 500 ml équipé d'une agitation mécanique, d'un réfrigérant et d'une ampoule de coulée. Le mélange est agité et est refroidi à la température de - 78 °C à l'aide d'un bain acétone + glace carbonique.
Le n-butyllithium en solution dans l'hexane (1,6 M, 52,3 ml, 0,97 éq) est chargé dans l'ampoule de coulée, puis est additionné en 10 minutes environ. Le mélange est ensuite laissé pendant 30 mn sous agitation à la température de - 78 °C. L'ampoule de coulée est remplacée par une ampoule de coulée contenant le trichlorure de bore en solution dans l'hexane (1,0 M, 19 ml). Le trichlorure de bore est ajouté en 15 min, puis le mélange réactionnel est laissé pendant 30 min sous agitation à la température de - 78 °C. On laisse ensuite revenir à température ambiante le mélange en 1 h environ. On ajoute alors une solution aqueuse saturée en KCI (100 ml). Le mélange est alors biphasique et homogène. L'éther isopropylique est distillé. Le KB(C₆F₅)₄ précite en fin de distillation. Il est récupéré par filtration, puis il est lavé avec une solution saturée en KCI (100 ml) avant d'être séché sous vide à la température de 35 °C.
On obtient ainsi un produit titrant 97 % en produit attendu, avec un rendement de 99 %.
. les accélérateurs selon l'invention utilisés sont les alcools benzyliques de formules suivantes :

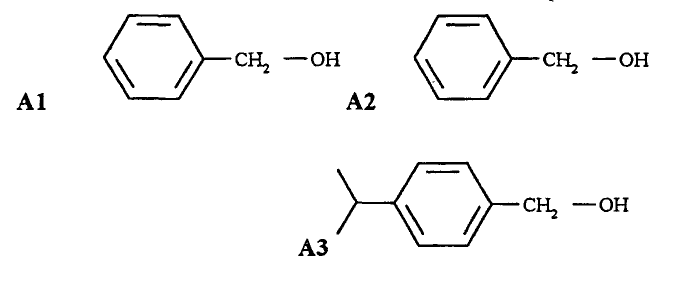

Le système photoamorceur est préparé par mise en solution du borate d'onium (éventuellement complété par une partie du PDMS epoxydé à mettre en oeuvre), dans l'alcool isopropylique (IPA) pour les exemples 1 et 5 comparatifs et dans l'accélérateur A1 (exemple 2), A2 (exemple 3), ou A3 (exemples 4 et 6 à 8).

### II. Le mode opératoire général suivi est le suivant :

- à 100 parties en poids de PDMS époxydé,
- on ajoute 0,9 parties en poids d'une solution de borate d'onium (amorceur 0,3 parties en poids) dans l'alcool isopropylique (exemples comparatifs 1 et 5) ou dans les accélérateurs A1, A2 et A3 (exemples 2, 3, 4 et 6 à 8 respectivement) (0,6 parties en poids),
- on mélange par agitation manuelle pendant 30 mn.

### III - Tests

### III.1 Tests de réactivité (Exemples 1 à 4)

Les tests de réactivité décrits dans les exemples suivants ont été effectués sur un appareil de mesure de point de gel VNC (vibrating needle curometer), commercialisé par la Société RAPRA Ltd, auquel un dispositif d'irradiation UV a été ajouté. Au cours de la réticulation, l'aiguille du VNC plongée dans le mélange à étudier va rencontrer une résistance qui va se manifester par une diminution de la tension de sortie de l'appareil. On mesure le temps nécessaire pour atteindre une diminution de 10, 50 et 90 % de la tension, pour une épaisseur à polymériser de 2 mm.

### III. 2 Evaluation des forces de décollement par tests de pelage

* Cette évaluation se fait, après la formulation du revêtement silicone, selon les étapes suivantes :
   - enduction du mélange sur un film polyester PET 6028 (commercialisé par RHONE POULENC) à l'aide d'une barre de Meyer. L'épaisseur déposée peut varier de 1 à 4 µm (taux de dépôt variant de 0,5 à 3 g / m²),
   - réticulation de l'enduction sous UV à une longueur d'onde de 360 nm avec une puissance de 120 W/cm² irradié.
   - collage de trois types d'adhésifs représentatifs sur le revêtement réticulé :
      adhésifs
      TESA® 4154 (caoutchouc)
      TESA® 4651 (caoutchouc)
      TESA® 4970 (acrylique)
   - mise sous presse (70g/m²) 20 à 24 heures :
      . à froid (22-23° C) pour les adhésifs 4154 et 4970, test FINAT n° 10
      . à chaud (70° C) pour l'adhésif 4651 test FINAT n° 11.
* Le niveau d'adhérence peut ensuite être évalué par mesure de la force de décollement ou de pelage.
Cette force est mesurée par un dynamomètre décollant les adhésifs à la vitesse de 300 mm/min. Le résultat est donné en g/cm.

### IV. Résultats

### IV.1 Réactivité exemples 1 à 4

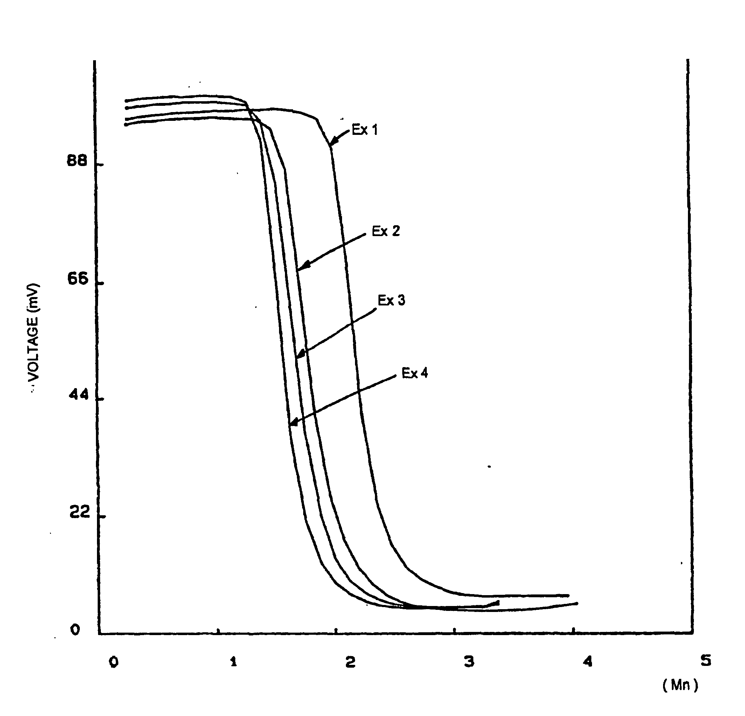

Les résultats sont donnés par les courbes de la **figure unique** annexée. Ces courbes représentent l'évolution de la tension de sortie du VNC en mV en fonction du temps.
Le tableau 1 ci-dessous donne les temps en min nécessaires pour atteindre une diminution de 10,50 et 90 % de la tension.

**TABLEAU 1**

| DIMINUTION DE LA TENSION | 10 % | 50 % | 90 % |
|---|---|---|---|
| Exemple 1 | 1,75 | 2,15 | 2,45 |
| Exemple 2 | 1,40 | 1,75 | 2,20 |
| Exemple 3 | 1,30 | 1,70 | 2,00 |
| Exemple 4 | 1,30 | 1,55 | 1,90 |

### IV. 2 Forces de pelage exemples 5 à 8

Le tableau 2 ci-dessous présente les résultats d'antiadhérence obtenus pour trois adhésifs.

| EXEMPLES | TAUX EPOXY en méq molaire/100 g PDMS | ANTIADHERENCE (g/cm) | | |
|---|---|---|---|---|
| | | Adhésifs | | |
| | | 4154 | 4970 | 4651 |
| 5 | 94 | 2,05 | 15,4 | 65,00 |
| 6 | 63 | 0,99 | 5,48 | 4,66 |
| 7 | 94 | 1,72 | 10,41 | 20,07 |
| 8 | 126 | 10,94 | 23,85 | 64,51 |

### EXEMPLES 9 A 12 : ESSAIS D'ENDUCTION.

### I. Matières premières et conditions expérimentales

* huile silicone = PDMS époxydé dans laquelle a = 8 et b = 110,
* photoamorceur = 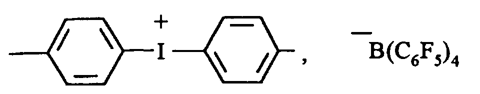
* induction sur papier glassine® 9564 (commercialisé par la Société SIBILLE). Cette induction est effectuée comme décrit dans les exemples 5 à 8 ci-dessus,
* adhésifs : ce sont les mêmes que pour les exemples 1 à 8 (cf III.2 supra),
* puissance lampe = 120 W (FUSION TYPE H).

### II - Résultats

- Après passage sous la lampe UV, on note la vitesse de défilement en m/min nécessaire au durcissement.
- De manière connue en soi, on mesure le pourcentage d'extractible correspondant au PDMS non réticulé, présent dans le revêtement d'enduction durci et extractible par solvants.
   L'analyse pondérale du PDMS extractible s'effectue par spectrométrie IR.
- Le protocole de mesure d'antiadhérence est le même que pour les exemples 5 à 8.

Le tableau 3 ci-dessous donne des conditions de tests et les résultats obtenus.

| EXEMPLES n° | Accélérateur | Vitesse (m/min) | % extractibles | ANTIADHERENCE g/cm | | |
|---|---|---|---|---|---|---|
| | | | | Adhésifs | | |
| | | | | 4154 | 4970 | 4651 |
| 9 | IPA | 150 | 7,4 | 3,0 | 10,0 | 24,0 |
| 10 | A₃ | 150 | 6,7 | 2,8 | 8,2 | 21,0 |
| 11 | IPA | 200 | 14,5 | 2,0 | 10,0 | 26,0 |
| 12 | A₃ | 200 | 11,7 | 1,0 | 8,3 | 22,5 |

Les exemples 9 et 11 sont comparatifs aux exemples 10 et 12.

### III - Commentaires

On trouve, systématiquement, à vitesse égale, des forces d'adhérence plus faibles lorsqu'on utilise l'A₃ selon l'invention, ce qui traduit une polymérisation plus complète.
De plus, les pourcentages d'extractibles sont plus faibles avec l'A₃ selon l'invention, ce qui confirme la meilleure réticulation obtenue par rapport aux témoins IPA.

## Revendications

1. Amorceurs de polymérisation et/ou de réticulation par voie cationique et sous activation photochimique et/ou thermique et/ou par faisceaux d'électrons, de monomères et/ou de polymères à groupements organofonctionnels,
lesdits amorceurs étant **caractérisés :**
- **en ce qu'**ils comprennent une quantité catalytique efficace d'au moins un borate d'onium
• dont l'entité cationique est choisie parmi :
1) les sels d'onium de formule (**II**) :
[(R¹)ₙ - A - (R²)ₘ]⁺ (**II**)
formule dans laquelle :
• A représente un élément des groupes 15 à 17 tel que I, S, Se, P, N,
• R¹ représente un radical aryle carbocyclique ou hétérocyclique en C₆-C₂₀, de préférence phényle, tolyle ou toluyle, ledit radical hétérocyclique pouvant contenir de l'azote, du soufre comme hétéroéléments,
• R² représente R¹ ou un radical alkyle ou alkényle linéaire ou ramifié en C₁-C₃₀ ;
lesdits radicaux R¹ et R² étant éventuellement substitués par un groupement alcoxy en C₁-C₂₅, alkyle en C₁-C₂₅, nitro, chloro, bromo, cyano, carboxy, mercapto,
• n est un nombre entier allant de 1 à v + 1, v étant la valence de l'élément A,
• m est un nombre entier allant de 0 à v - 1 avec n + m = v + 1,
2) - Les sels d'oxoisothiochromanium, notamment le sel de sulfonium du 2-éthyl-4-oxoisothiochromanium ou de 2-dodécyl-4-oxoisothiochromanium,
• et dont l'entité anionique borate a pour formule (**III**) :
[BXₐR_{b}] (**III**)
formule dans laquelle :
- a et b sont des nombres entiers allant de 0 à 4 avec a + b = 4,
- les symboles X représentent :
* un atome d'halogène (chlore, fluor) avec a = 0 à 3,
* une fonction OH avec a = 0 à 2,
- les symboles R sont identiques ou différents et représentent :
* un radical phényle substitué par au moins un groupement électroattracteur tel que CF₃, NO₂, CN, ou par au moins 2 atomes d'halogène (fluor tout particulièrement),
* un radical aryle contenant au moins deux noyaux aromatiques tel que biphényle, naphtyle, éventuellement substitué par au moins un élément ou un groupement électroattracteur, notamment atome d'halogène (fluor tout particulièrement), CF₃, NO₂, CN,
- et en ce qu'ils comportent au moins un accélérateur de polymérisation et/ou réticulation choisi parmi les alcools benzyliques de formule générale (**I**) suivante : 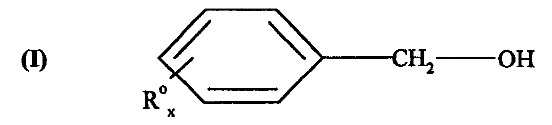 dans laquelle :
- R^{o} est un groupement électrodonneur ou électroaccepteur, de préférence électroaccepteur et choisi parmi les (cyclo)alkyles, les (cyclo)alcoxyles en C₁-C₁₂ linéaires ou ramifiés, les aryles, éventuellement substitués de préférence par des halogènes, ou les radicaux du type NO₂,
- x est entier compris entre 0 et 5,
- et les groupements R^{o} étant identiques ou différents entre eux quand x > 1,
les formules (**I**) dans lesquelles x = 0 ou celles dans lesquelles x > o et avec R^{o} représentant un groupement méthyle, t-butyle ou isopropyle, étant particulièrement préférées.

2. Amorceurs selon la revendication 1, **caractérisés en ce que** l'entité anionique borate est :
[B(C₆F₅)₄]⁻ [B(C₆H₄CF₃)₄]⁻ [B(C₆H₃(CF₃)₂)₄]⁻
[(C₆F₅)₂BF₂]⁻ [C₆F₅BF₃]⁻ [B(C₆H₃F₂)₄]⁻

3. Amorceurs selon la revendication 2, **caractérisés en ce que** l'entité cationique est du type onium et, de préférence, est choisie parmi les entités suivantes :
[(Φ)₂I]⁺ [C₈H₁₇-O-Φ-I-Φ]⁺ [(Φ-CH₃)₂I]⁺
[C₁₂H₂₅-Φ-I-Φ]⁺ [(C₈H₁₇-O-Φ)₂I]⁺
[(Φ)₃S]⁺ [(Φ)₂-S-Φ-O-C₈H₁₇]⁺
[Φ-S-Φ-S-(Φ)₂]⁺ [(C₁₂H₂₅-Φ)₂I]⁺

4. Amorceurs selon l'une quelconque des revendications 1 à 3, **caractérisés en ce que** le borate d'onium est :
[(Φ-CH₃)₂I]⁺, [B(C₆F₅)₄]⁻
[(Φ)₂I]⁺, [B(C₆F₅)₄]⁻ [Φ₂I]⁺, [B(C₆H₃(CF₃)₂)₄]⁻
[C₁₂H₂₅-Φ-I-Φ]⁺, [B(C₆F₅)₄]⁻ [(C₈H₁₇-O-Φ)₂I]⁺, [B(C₆F₅)₄]⁻
[(C₈H₁₇)-O-Φ-I-Φ)]⁺, [B(C₆F₅)₄]⁻ [(Φ)₃S]⁺, [B(C₆F₅)₄]⁻
[(Φ)₂S-Φ-O-C₈H₁₇]⁺, [B(C₆H₄CF₃)₄]⁻ [(C₁₂H₂₅-Φ)₂I]⁺, [B (C₆F₅)₄]⁻

5. Compositions à base d'au moins un polyorganosiloxane réticulable par voie cationique et d'au moins un amorceur selon l'une quelconque des revendications 1 à 4.

6. Compositions selon la revendication 5, **caractérisées en ce que** le polyorganosiloxane présente des groupements organofonctionnels du type époxyde et/ou vinyl éther et **en ce qu'**il est choisi parmi les polyorganosiloxanes qui sont :
→ soit linéaires ou sensiblement linéaires et constitués de motifs de formule (**IV**), terminés par des motifs de formule (**V**),
→ soit cvcliques et constitués par des motifs de formule (**IV**): 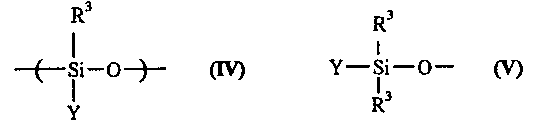 formules dans lesquelles :
• les symboles R³ sont semblables ou différents et représentent :
- soit un radical alkyle linéaire ou ramifié en C₁-C₆, éventuellement substitué, avantageusement par un ou des halogènes, les radicaux alkyles éventuellement substitués préférés étant : méthyle, éthyle, propyle, octyle et 3,3,3 trifluoropropyle,
- soit un radical cycloalkyle en C₅-C₈, éventuellement substitués,
- soit un radical aryle ou aralkyle, éventuellement substitué :
. notamment par des halogènes et/ou des alcoxyles,
. les radicaux phényle, xylyle, tolyle et dichlorophényle étant tout particulièrement sélectionnés,
- et, plus préférentiellement encore, au moins 60 % molaire des radicaux R³ étant des méthyles.
• les symboles Y sont semblables ou différents et représentent :
- soit le radical R³,
- soit un groupement organofonctionnel réticulable par voie cationique, de préférence un groupement époxyfonctionnel ou vinyloxyfonctionnel, relié au silicium par l'intermédiaire d'un radical divalent contenant, avantageusement, de 2 à 20 atomes de carbone comportant, éventuellement, un hétéroatome,
l'un au moins des symboles Y correspondant à un groupement organofonctionnel réticulable par voie cationique.

7. Compositions selon la revendication 6, **caractérisées en ce que** le polyorganosiloxane comporte de 1 à 10 groupements organofonctionnels par mole.

8. Compositions selon la revendication 6 ou 7, **caractérisées en ce que** ledit polyorganosiloxane est linéaire et présente une viscosité à 25° C de l'ordre de 10 à 10.000 mPa.s.

9. Procédé pour rendre des articles non adhérents à des surfaces auxquelles ils adhéreraient normalement, **caractérisé en ce que** l'on applique entre 0,1 et 5 g par m² de surface dudit article à enduire de composition faisant l'objet de l'une quelconque des revendications 5 à 8 et on réticule ladite composition par voie photochimique et/ou thermique et/ou sous faisceau d'électrons.

10. Procédé selon la revendication 9, **caractérisé en ce que** l'opération de réticulation est réalisée par photoactivation à l'aide d'un rayonnement UV de longueur d'onde de l'ordre de 200 à 400 namomètres, ladite photoactivation étant éventuellement couplée à une thermoactivation.

11. Articles au moins en partie revêtus d'au moins un film comprenant une composition selon l'une quelconque des revendications 5 à 8 au moins partiellement réticulée.

## Patentansprüche

1. Initiatoren für die kationische Polymerisation und/oder Vernetzung unter photochemischer und/oder thermischer Aktivierung und/oder unter Aktivierung mit Elektronenstrahlen von Monomeren und/oder Polymeren mit funktionellen organischen Gruppen, wobei die Initiatoren **dadurch gekennzeichnet sind,**
- **daß** sie eine wirksame katalytische Menge mindestens eines Oniumborats enthalten,
• dessen kationischer Bestandteil ausgewählt ist unter:
1) den Oniumsalzen der Formel (II)
[(R¹)ₙ - A - (R²)ₘ]⁺ (II),
in der bedeuten:
• A ein chemisches Element der Gruppen 15 bis 17, wie I, S, Se, P, N,
• R¹ einen carbocyclischen oder heterocyclischen C₆-C₂₀-Arylrest, vorzugweise Phenyl, Tolyl oder Toluyl, wobei der heterocyclische Rest Stickstoff, Schwefel als Heteroatome enthalten kann,
• R² einen Rest R¹ oder geradkettiges oder verzweigtes C₁-C₃₀-Alkyl oder C₁-C₃₀-Alkenyl,
wobei die Reste R¹ und R² gegebenenfalls mit einer C₁-C₂₅-Alkoxygruppe, C₁-C₂₅-Alkylguppe, Nitro, Chlor, Brom, Cyano, Carboxy, Mercapto substituiert sind,
• n eine ganze Zahl im Bereich von 1 bis v+1, worin v der Wertigkeit des Elements A entspricht,
• m eine ganze Zahl im Bereich von 0 bis v-1 mit n+m = v+1,
2) den Oxoisothiochromanium-Salzen, insbesondere dem Sulfoniumsalz des 2-Ethyl-4-oxoisothiochromaniums oder des 2-Dodecyl-4-oxoisothiochromaniums,
• und dessen anionischer, aus einem Borat bestehender Bestandteil die Formel (III)
[BXₐR_{b}] (III)
aufweist, in der bedeuten:
- a und b ganze Zahlen im Bereich von 0 bis 4 mit a + b = 4,
- die Symbole X
* ein Halogenatom (Chlor, Fluor) mit a = 0 bis 3,
* eine Hydroxygruppe mit a = 0 bis 2,
- die Symbole R gleiche oder verschiedene Reste, die bedeuten:
* einen Phenylrest, der mit mindestens einer elektronenanziehenden Gruppe, wie CF₃, NO₂, CN, oder mit mindestens zwei Halogenatomen (insbesondere Fluor) substituiert ist,
* einen Arylrest, der mindestens zwei aromatische Ringe, wie Biphenyl, Naphthyl, enthält, der gegebenenfalls mit mindestens einem elektronenanziehenden Element oder einer elektronenanziehenden Gruppe, insbesondere einem Halogenatom (vor allem Fluor), CF₃, NO₂, CN, substituiert ist,
- und **daß** sie mindestens einen Polymerisations- und/oder Vernetzungsbeschleuniger enthalten, der unter den Benzylalkoholen der folgenden allgemeinen Formel (I) 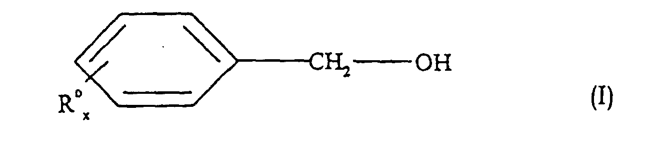 ausgewählt ist, in der bedeuten:
- R^{o} eine Elektronendonor- oder Elektronenakzeptor-Gruppe, vorzugsweise Elektronenakzeptor-Gruppe, die unter geradkettigen oder verzweigten C₁-C₁₂-(Cyclo)alkylresten, geradkettigen oder verzweigten C₁-C₁₂-(Cyclo)alkoxyresten, Arylresten, die gegebenenfalls vorzugsweise mit Halogenatomen oder Resten vom Typ NO₂ substituiert sind, ausgewählt ist,
- x eine ganze Zahl im Bereich von 0 bis 5,
wobei die Gruppen R^{o} gleich oder verschieden sind, wenn x > 1, und wobei die Formeln (I), in denen x = 0 ist, oder die Formeln (I), in denen x > 0 ist, in denen R^{o} Methyl, *tert*.-Butyl oder Isopropyl bedeutet, besonders bevorzugt sind.

2. Initiatoren nach Anspruch 1, **dadurch gekennzeichnet, daß** es sich bei dem anionischen Borat-Bestandteil um
[B(C₆F₅)₄]⁻, [B(C₆H₄CF₃)₄]⁻, [B(C₆H₃(CF₃)₂)₄]⁻,
[(C₆F₅)₂BF₂]⁻, [C₆F₅BF₃]⁻, [B(C₆H₃F₂)₄]⁻
handelt.

3. Initiatoren nach Anspruch 2, **dadurch gekennzeichnet, daß** es sich bei dem kationischen Bestandteil um ein Kation vom Onium-Typ handelt, der vorzugsweise unter den folgenden Bestandteilen ausgewählt ist:
[(Φ))₂I]⁺ [C₈H₁₇-O-Φ-I-Φ]⁺, [(Φ-CH₃)₂I]⁺,
[C₁₂H₂₅-Φ-I-Φ]⁺, [(C₈H₁₇-O-Φ)₂I]⁺
[(Φ)₃S]⁺ [(Φ)₂-S-Φ-O-C₈H₁₇]⁺,
[Φ-S-Φ-S-(Φ)₂]⁺, [(C₁₂H₂₅-Φ)₂I]⁺

4. Initiatoren nach einem der Ansprüche 1 bis 3, **dadurch gekennzeichnet, daß** es sich bei dem Oniumborat um
[(Φ-CH₃)₂I]⁺, [B(C₆F₅)₄]⁻
[(Φ))₂I]⁺,[B(C₆F₅)₄]⁻ [(Φ)₂I]⁺, [B(C₆H₃(CF₃)₂)₄]⁻
[C₁₂H₂₅-Φ-I-Φ]⁺, [B(C₆F₅)₄]⁻ [(C₈H₁₇-O-Φ)₂I]⁺,[B(C₆F₅)₄]⁻
[C₈H₁₇-O-Φ-I-Φ]⁺,[B(C₆F₅)₄]⁻ [(Φ)₃S]⁺,[B(C₆F₅)₄]⁻
[(Φ)₂S-Φ-O-C₈H₁₇]⁺,[B(C₆H₄CF₃)₄]⁻ [(C₁₂H₂₅-Φ)₂I]⁺,[B(C₆F₅)₄]⁻
handelt.

5. Zusammensetzungen auf der Basis mindestens eines kationisch vernetzbaren Polyorganosiloxans und mindestens eines Initiators nach einem der Ansprüche 1 bis 4.

6. Zusammensetzung nach Anspruch 5, **dadurch gekennzeichnet, daß** das Polyorganosiloxan funktionelle organische Gruppen vom Epoxid- und/oder Vinylether-Typ aufweist und **daß** es unter den Polyorganosiloxanen ausgewählt ist, die
- geradkettig oder im wesentlichen geradkettig sind und aus Einheiten der Formel (IV) bestehen, die an den Kettenenden Einheiten der Formel (V) aufweisen, oder
- cyclisch sind und aus Einheiten der Formel (IV) 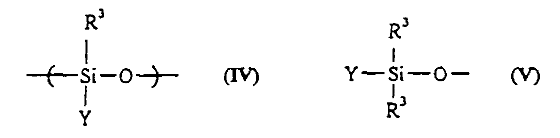 bestehen, in denen bedeuten:
• die Symbole R³ Reste, die gleich, ähnlich oder verschieden sind und bedeuten:
- geradkettiges oder verzweigtes C₁-C₆-Alkyl, das gegebenenfalls substituiert ist, vorteilhaft mit einem oder mehreren Halogenatomen, wobei die bevorzugten gegebenenfalls substituierten Alkylreste Methyl, Ethyl, Propyl, Octyl und 3,3,3-Trifluorpropyl sind,
- C₅-C₈-Cycloalkyl, das gegebenenfalls substituiert ist,
- Aryl oder Aralkyl, das gegebenenfalls substituiert ist,
* insbesondere mit Halogenatomen und/oder Alkoxyresten,
* wobei Phenyl, Xylyl, Tolyl und Dichlorphenyl besonders bevorzugt ausgewählt sind,
- wobei noch bevorzugter mindestens 60 Mol-% der Reste R³ Methyl darstellen,
• die Symbole Y Reste, die gleich, ähnlich oder verschieden sind und bedeuten:
- den Rest R₃, oder
- eine kationisch vernetzbare funktionelle organische Gruppe, vorzugsweise eine Epoxid-Gruppe oder Vinyloxy-Gruppe, die mit dem Siliciumatom über einen zweiwertigen Rest verbunden ist, der vorteilhaft 2 bis 20 Kohlenstoffatome enthält, der gegebenenfalls ein Heteroatom aufweist,
wobei mindestens eines der Symbole Y einer kationisch vernetzbaren, funktionellen organischen Gruppe entspricht.

7. Zusammensetzungen nach Anspruch 6, **dadurch gekennzeichnet, daß** das Polyorganosiloxan 1 bis 10 funktionelle organische Gruppen pro Mol aufweist.

8. Zusammensetzung nach Anspruch 6 oder 7, **dadurch gekennzeichnet, daß** das Polyorganosiloxan geradkettig ist und bei 25 °C eine Viskosität von etwa 10 bis 10000 mPa·s aufweist.

9. Verfahren zur Beseitigung des Haftvermögens von Gegenstanden auf Oberflächen, auf denen sie normalerweise haften würden, **dadurch gekennzeichnet, daß** pro Quadratmeter der Oberfläche des zu beschichtenden Gegenstands 0,1 bis 5 g der Zusammensetzung nach einem der Ansprüche 5 bis 8 aufgetragen werden und **daß** die Zusammensetzung photochemisch und/oder thermisch und oder mit einem Elektronenstrahl vernetzt wird.

10. Verfahren nach Anspruch 9, **dadurch gekennzeichnet, daß** die Vernetzung durch Photoaktivierung mit UV-Strahlung mit einer Wellenlänge von etwa 200 bis 400 nm erfolgt, wobei die Photoaktivierung gegebenenfalls mit einer Wärmeaktivierung gekoppelt ist.

11. Gegenstand, der mindestens teilweise mit mindestens einem Film beschichtet ist, der eine Zusammensetzung nach einem der Ansprüche 5 bis 8 umfaßt, die mindestens teilweise vernetzt ist.

## Claims

1. Initiators for the cationic polymerization and/or crosslinking, under photochemical and/or thermal activation and/or activation by a beam of electrons, of monomers and/or polymers containing organofunctional groups,
said initiators being **characterized:**
- **in that** they comprise an effective catalytic amount of an onium borate
• the cationic species of which is chosen from:
1) the onium salts of formula (**II**):
[(R¹)ₙ - A- (R²)ₘ]⁺ (**II**)
in which formula:
• A represents an element from groups 15 to 17, such as I, S, Se, P, N,
• R¹ represents a C₆ -C₂₀ carbocyclic or heterocyclic aryl radical, preferably phenyl, tolyl or toluyl, it being possible for said heterocyclic radical to contain nitrogen or sulfur as hetero elements,
• R² represents R¹ or a C₁ -C₃₀ linear or branched alkyl or alkenyl radical; said radicals R¹ and R² being optionally substituted with a C₁ -C₂₅ alkoxy, C₁ -C₂₅ alkyl, nitro, chloro, bromo, cyano, carboxyl, mercapto, etc. group,
• n is an integer ranging from 1 to v + 1, v being the valency of the element A,
• m is an integer ranging from 0 to v - 1 with n + m = v + 1,
2) the oxoisothiochromanium salts, in particular the sulfonium salt of 2-ethyl-4-oxoisothiochromanium or of 2-dodecyl-4-oxoisothiochromanium,
• the anionic borate species of which has the formula (**III**):
[BXₐR_{b}] (**III**)
in which formula:
- a and b are integers ranging from 0 to 4 with a + b = 4,
- the symbols X represent:
* a halogen atom with a=0 to 3; or
* an OH function with a=0 to 2,
- the symbols R are identical or different and represent:
* a phenyl radical substituted with at least one electron-attracting group such as CF₃, NO₂, CN, or with at least two halogen atoms (more particularly Fluor);
* an aryl radical containing at least two aromatic rings, such as biphenyle, naphtyle, optionally substituted with at least one electron-attracting element or group, notably halogen atom (more particularly Fluor), CF₃, NO₂, CN;
- and in that they comprise at least one polymerization or crosslinking accelerator chosen from those of the following general formula (**I**): 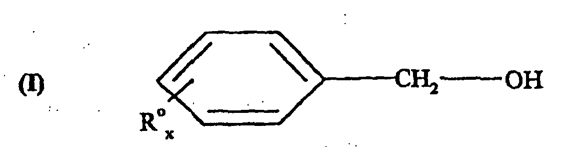 in which:
- R^{o} is an electron-donating or electron-accepting group, preferably an electron-accepting group, chosen from linear or branched C₁-C₁₂(cyclo)alkyls and (cyclo)alkoxyls, aryls, which are optionally substituted preferably with halogens, or radicals of the type NO₂ ;
- x is an integer from 0 to 5,
- and the groups R^{o} being identical to or different from each other when x > 1,
the formulae (**I**) in which x = 0 or those in which x > 0 with R^{o} representing a methyl, t-butyl or isopropyl group, being particularly preferred.

2. Initiators according to claim 1, **characterized in that** the anionic borate species
[B(C₆F₅)₄]⁻ [B(C₆H₄CF₃)₄]⁻ [B(C₆H₃(CF₃)₂)₄]⁻
[(C₆F₅)₂BF₂]⁻ [C₆F₅BF₃]⁻ [B (C₆H₃F₂)₄]

3. Initiators according to claim 2, **characterized in that** the cationic species is of the onium type and is preferably chosen from the following species:
[(Φ)₂I]⁺ [C₈H₁₇-O-Φ-I-Φ]⁺ [(Φ-CH₃)₂I]⁺
[C₁₂H₂₅-Φ-I-Φ]⁺ [(C₈H₁₇-O-Φ)₂I]⁺
[(Φ)₃S]⁺ [(Φ)₂-S-Φ-O-C₈H₁₇]⁺
[Φ-S-Φ-S-(Φ)₂]⁺ [(C₁₂H₂₅-Φ)₂I]⁺

4. Initiators according to any of claims 1 to 3, **characterized in that** the onium borate is :
[(Φ-CH₃)₂I)⁺, [B(C₆F₅)₄]⁻
[(Φ)₂I]⁺, [B(C₆F₅)₄]⁻ [Φ₂I]⁺, [B(C₆H₃(CF₃)₂)₄]⁻
[C₁₂H₂₅-Φ-I-Φ]⁺, [B(C₆F₅)₄]⁻ [(C₈H₁₇-O-Φ)₂I]⁺, [B(C₆F₅)₄]⁻
[(C₈H₁₇)-O-Φ-I-Φ)]⁺, [B(C₆F₅)₄]⁻ [(Φ)₃S]⁺, [B(C₆F₅)₄]⁻
[(Φ)₂S-Φ-O-C₈H₁₇)^{+,} [B(C₆H₃(CF₃)₄]⁻ [(C₁₂H₂₅-Φ)₂I]⁺, [B(C₆F₅)₄]⁻

5. Compositions based on at least one cationically crosslinkable polyorganosiloxane and on at least one initiator as claimed in any of claims 1 to 4.

6. Compositions according to claim 5, **characterized in that** the polyorganosiloxane has organofunctional groups of the epoxide and/or vinyl ether type and in which it is chosen from the polyorganosiloxanes which are:
→ either linear or substantially linear and consist of units of formula (**IV**), ending with units of formula (**V**),
→ or cyclic and consist of units of formula (**IV**): 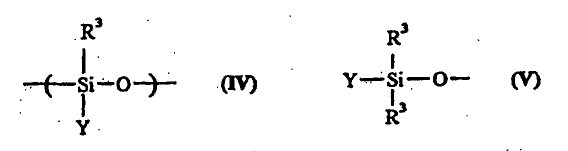 in which formulae:
• the symbols R³ are similar or different and represent:
- either a linear or branched C₁ -C₆ alkyl radical, which is optionally substituted, advantageously with one or more halogens, the optionally substituted alkyl radicals preferred being: methyl, ethyl, propyl, octyl and 3,3,3-trifluoropropyl,
- or a C₅-C₈ cycloalkyl radical, which is optionally substituted,
- or an aryl or an aralkyl radical, which is optionally substituted:
- in particular with halogens and/or alkoxyls,
- phenyl, xylyl, tolyl and dichlorophenyl radicals being most particularly selected,
- and, even more preferably, at least 60 mol % of the radicals R³ being methyls,
• the symbols Y are similar or different and represent:
- either the radical R³,
- or a cationically crosslinkable organofunctional group, preferably an epoxyfunctional or vinyloxyfunctional group, which is linked to the silicon via a divalent radical containing, advantageously, from 2 to 20 carbon atoms including, optionally, a heteroatom,
at least one of the symbols Y corresponding to a cationically crosslinkable organofunctional group.

7. Compositions according to claim 6, **characterized in that** the polyorganosiloxane contains from 1 to 10 organofunctional groups per mole.

8. Compositions according to claim 6 or 7, **characterized in that** said polyorganosiloxane is linear and has a viscosity at 25°C. of the order of 10 to 10,000 mPas.

9. Process for rendering articles non-adhesive with respect to surfaces to which they would normally adhere, **characterized in that** between 0.1 and 5 g of composition forming the subject of any of claim 5 to 8 is applied per m² of surface of said article to be coated, and **in that** said composition is crosslinked photochemically and/or thermally and/or by a beam of electrons.

10. Process according to claim 9, **characterized in that** the crosslinking operation is performed by photoactivation using UV radiation with a wavelength of the order of 200 to 400 nanometers, said photoactivation optionally being combined with a thermal activation.

11. Articles which are at least partly coated with at least one film comprising a composition according to any of claims 5 to 8, which composition is at least partially crosslinked.
